# EUROPEAN PATENT APPLICATION

(11) **EP 2 078 880 A2**
(43) Date of publication of application: **15.07.2009**
(21) Application number: 08170509.7
(22) Date of filing: 02.12.2008
(51) Int. Cl.: F16F 1/18

(54) **Leaf spring material and manufacturing method thereof**

(30) Priority: 28.11.2007 JP 2007307653
(71) Applicant: NHK SPRING CO., LTD., Yokohama-shi, Kanagawa 236-0004 (JP); Horikiri, Inc., Yachiyo-shi Chiba 276-0022 (JP)
(72) Inventor: Ayada, Michihiko, Yokohama Chiba 236-0004 (JP); Ono, Yoshiki, Yokohama 236-0004 (JP); Takahashi, Fumio, Yokohama 236-0004 (JP); Ebashi, Hironori, Yachiyo-shi Chiba 276-0022 (JP); Kikuchi, Sakae, Yachiyo-shi Chiba 276-0022 (JP)
(74) Representative: Skuhra, Udo

(57) **Abstract**

The present invention provides a leaf spring material superior in mechanical characteristics and a manufacturing method of the leaf spring material capable of reliably achieving the same, utilizing induction hardening. The leaf spring material comprises a substantially strip-shaped steel plate having a first surface and a second surface. The leaf spring material has in the vicinity of the first surface a hardened layer comprising an induction-hardened structure having a higher average hardness than that of the parent material structure in the vicinity of the second surface, and a compressive residual stress layer of a thickness at least not smaller than that of the thickness of the hardened layer in the vicinity of the first surface. Such a characteristic structure is achieved by stress-induced hardening that imparts a predetermined tensile stress or higher.

## Description

### BACKGROUND OF THE INVENTION

### Field of the Invention

The present invention relates to a leaf spring material and a manufacturing method thereof, and more specifically to a leaf spring material and a manufacturing method thereof that utilizes heat treatment based on induction hardening so as to improve the service life of the spring.

### Description of the Background Art

The spring material used for "springs" is provided by cold or hot forming a metal material made of spring steel so as to impart a "spring" shape to the material, and heat treating the material by quenching and tempering. To improve the fatigue strength of such a material, shot peening is also widely performed on the surface thereof to impart compressive residual stress. In recent years, spring materials in which the fatigue strength is improved by performing quenching using a high frequency heating apparatus have also been known.

For example, in JP, A, 2004-323912 is disclosed a coil spring material in which a cold-formed coil is subjected to quenching using a high frequency heating apparatus so as to improve the fatigue strength. This publication of unexamined application states that, with this arrangement, the induction hardening makes it possible to quickly perform heating, thereby suppressing decarburization of the surface of the spring material, reducing the growth of the grain size, and improving the fatigue strength of the "spring." Additionally, the heat treatment based on the high frequency heating apparatus involves relatively simple temperature control, thereby making it possible to perform heating with high accuracy and reliably obtain a metal structure that imparts high fatigue strength to the spring material.

Additionally, a spring material that is partially subjected to heat treatment using a high frequency heating apparatus so as to improve fatigue strength is also known.

For example, in JP, A, 2006-71082 is disclosed a manufacturing method of a spring material in which induction hardening is performed only on one surface of the leaf spring material. Specifically, a strip-shaped leaf spring material made of spring steel is hot formed and subjected to the heat treatment of quenching and tempering. That is, a normal leaf spring material is achieved. Subsequently, since the leaf spring material is provided with thickness, load is added in the same direction as the state of usage of the leaf spring, generating tensile stress on a first surface and compressive stress on a second surface. When heat is applied in the vicinity of the first surface on which the tensile stress acts using a high frequency heating apparatus, the tensile stress is alleviated. Then when the load is released after cooling, the first surface is imparted with compressive stress, making it possible to achieve the spring material with high fatigue strength.

As in the disclosure of the first publication of unexamined application, the high frequency heating apparatus makes it possible to subject the spring material to heat treatment with high accuracy, thereby reliably imparting a predetermined metal structure to the spring material. Additionally, as in the disclosure of the second publication of unexamined application, a composite structure can be achieved by partially subjecting the spring material to heat treatment, resulting in a promising spring material superior in "spring" mechanical characteristics. Recently, however, an even higher fatigue strength is in demand.

The present invention has been made in view of the above circumstances, and it is an object of the present invention to provide a leaf spring material superior in mechanical characteristics, and a manufacturing method of the leaf spring material capable of reliably achieving the same, utilizing high frequency heating.

### SUMMARY OF THE INVENTION

The leaf spring material according to the present invention comprises a substantially strip-shaped steel plate having a first surface and a second surface. Such a leaf spring material has in the vicinity of the first surface a hardened layer comprising an induction-hardened structure having a higher average hardness than that of the parent material structure in the vicinity of the second surface, and has a compressive residual stress layer of a thickness that is at least not smaller than that of the hardened layer in the vicinity of the first surface.

According to the present invention, the leaf spring material is imparted not only with a hardened layer comprising an induction-hardened structure, but also with compressive residual stress from the side of the quenched surface to the region having a parent material structure of a deep portion. Such a configuration makes it possible to improve the mechanical characteristics in the vicinity of the boundary face between the parent material structure and induction-hardened structure, significantly improving the fatigue characteristics of the "spring."

The manufacturing method of the leaf spring material according to the present invention comprises the steps of imparting tensile stress on a first surface along the longitudinal direction of the first surface and compressive stress on a second surface along the longitudinal direction of the second surface of a substantially strip-shaped steel plate, and subjecting the first surface to induction hardening. The induction hardening imparts in the vicinity of the first surface a hardened layer comprising an induction-hardened structure having a higher average hardness than that of the parent material structure in the vicinity of the second surface, and imparts a compressive residual stress layer of a thickness that is at least not smaller than that of the hardened layer in the vicinity of the first surface.

According to the present invention, it is possible to achieve the leaf spring material imparted with not only a hardened layer comprising an induction-hardened structure, but also with compressive residual stress to the region having a parent material structure of a deep portion. That is, the present invention makes it possible to improve the mechanical characteristics in the vicinity of the boundary face between the parent material structure and the induction-hardened structure, significantly improving the fatigue characteristics of the "spring." Furthermore, such a leaf spring material can be achieved using a simple method such as described above that is based on induction hardening. Such a method makes it possible to reliably provide the leaf spring material.

### BRIEF DESCRIPTION OF THE DRAWINGS

FIG. 1 is a diagram showing the manufacturing method of a leaf spring material according to the present invention.
FIG. 2 is a partial cross-sectional view of the leaf spring material according to the present invention.
FIG. 3 is a graph showing Vickers hardness and the number of cycles to failure in a fatigue test of the leaf spring material.
FIG. 4 is a graph showing the number of cycles to failure and hardened layer thickness d with respect to the steel plate thickness D in a fatigue test of the leaf spring material.
FIG. 5 is a graph showing surface compressive residual stress and the number of cycles to failure in a fatigue test of the leaf spring material.
FIG. 6 is a diagram showing the distribution of Vickers hardness of the induction-hardened leaf spring material.
FIG. 7 is a diagram showing the distribution of the residual stress of the induction-hardened leaf spring material.
FIG. 8 is a diagram showing the results of fatigue test in the relationship between a thickness y of the compressive residual stress layer and a thickness d of the hardened layer in a fatigue test of the leaf spring material.
FIG. 9 is a graph showing the number of cycles to failure and the ratio of a thickness y of the compressive residual stress layer to a thickness d of the hardened layer in a fatigue test of the leaf spring material.

### DESCRIPTION OF THE PREFERRED EMBODIMENTS

An embodiment of a leaf spring material and the manufacturing method thereof according to the present invention will now be described.

First, a metal material made of spring steel or the like is cool or heat formed so as to prepare a leaf spring material imparted with a "leaf spring" shape. That is, a normal leaf spring material is prepared. Under ambient temperature, a load is added to such a leaf spring material made of a steel plate bent into a substantially strip shape, in the same direction as when used as a "spring." That is, the leaf spring material of a bent shape is straightened out and fixed as a flat plate. At this time, because the leaf spring material is provided with thickness, tensile stress is generated along the longitudinal direction of the first surface, and compressive stress is generated along the longitudinal direction of the second surface. To achieve a typical induction-hardened structure described later, a higher tensile stress is established on the first surface. This tensile stress is preferably 1000MPa or higher at ambient temperature.

When induction hardening is performed on the first surface with the leaf spring material straightened out and fixed as a flat plate, the tensile stress of that surface is quickly alleviated by heating. When the fixed state and the load are released after cooling, compressive residual stress is imparted on the first surface of the leaf spring material. Subsequently, low-temperature heat treatment of 80°C to 160°C is performed for a duration shorter than 120 minutes so as to alleviate the residual stress by a predetermined amount.

Here, in the leaf spring material obtained by the above-described stress-induced hardening process, the second surface vicinity opposite the induction-hardened surface exhibits the parent material structure. That is, the second surface vicinity has the same structure as that of the leaf spring material initially prepared, which is the parent material structure comprising one or more of martensite, a tempered martensite structure, troostite, sorbite, bainite, ferrite, and pearlite. Furthermore, the first surface vicinity also has the same structure as the parent material structure prior to induction hardening. When stress-induced hardening is performed, the vicinity of the first surface achieves an induction-hardened structure mainly in the form of martensite, having a higher average hardness than that of the parent material structure of 650HV or higher. The thickness of the hardened layer having a high average hardness and comprising such an induction-hardened structure is preferably 5 to 10 percent of the thickness of the leaf spring material.

However, when induction hardening is performed while imparting large tensile stress as described above on the first surface, the distribution of the above-described compressive residual stress can be adjusted by adjusting the tensile stress, induction hardening conditions (output, movement speed, and the like), and cooling conditions (cooling power, movement speed, and the like) (hereinafter referred to as "quenching conditions"). Particularly, the distribution of the compressive residual stress achieved by induction hardening exhibits a substantially stable compressive stress value from the first surface toward the second surface side, which then suddenly decreases to a stress value near zero. That is, the residual compressive stress characteristically exhibits a step-type residual stress distribution. The location in which the compressive residual stress suddenly decreases from a predetermined value or higher extends to the region having the parent material structure of a deep portion more than the hardened layer having the induction-hardened structure. That is, the present invention makes it possible to improve the mechanical characteristics in the vicinity of the boundary face between the parent material structure and the induction-hardened structure, significantly improving the fatigue characteristics of the "spring." The predetermined value of such compressive residual stress is preferably 650MPa or higher so as to significantly improve the spring service life.

As described above, according to the leaf spring material of the present invention achieved based on the manufacturing method of the present invention, the leaf spring material reliably has a service life equivalent to three times that of leaf spring material comprising a conventional modified-ausformed material or higher when evaluated at a B₁₀ life, which is the fatigue life based on Weibull statistics and probability, for example.

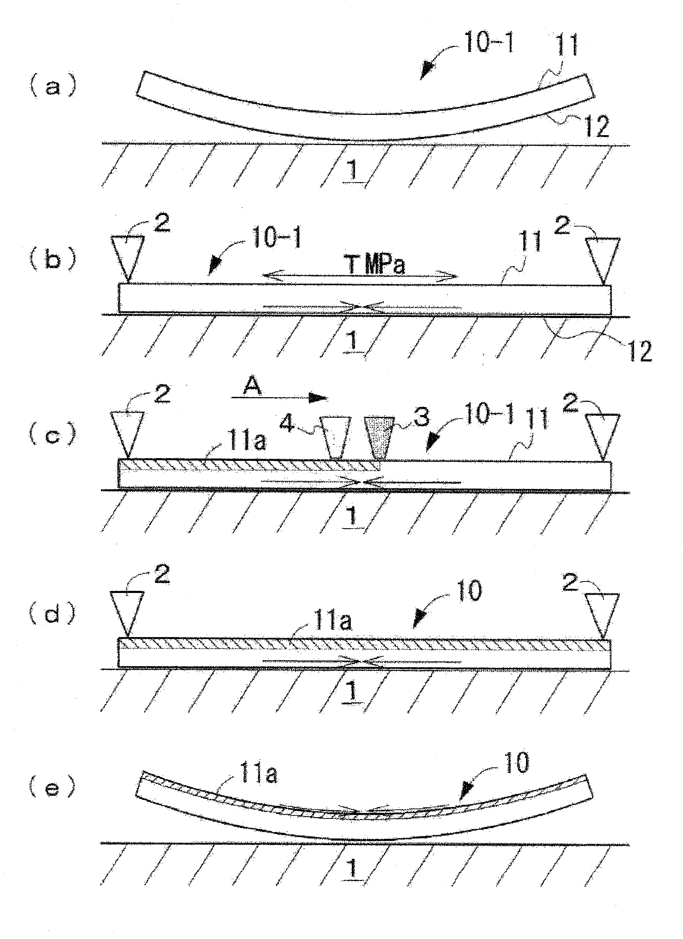

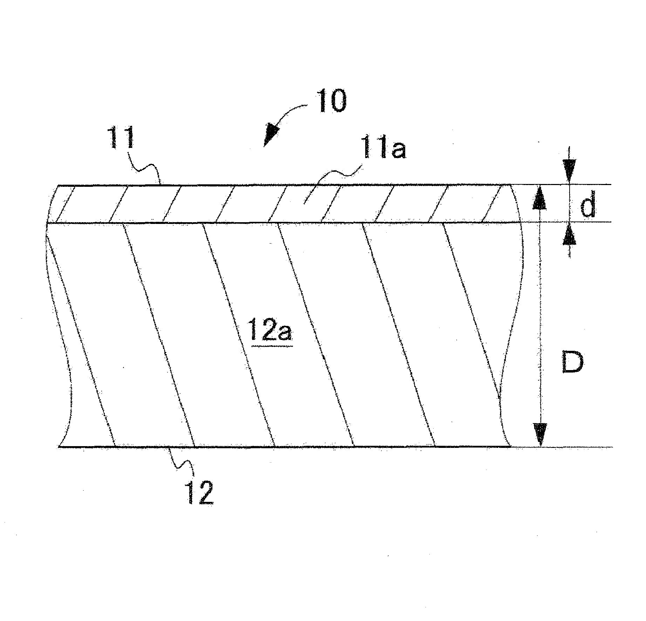

An embodiment according to the present invention will now be described in detail, with reference to FIG. 1 and FIG. 2.

While in the following the embodiment employs JIS SUP11A steel, the steel is not limited thereto. Particularly, similar implementation is possible using a general spring steel (JIS4801) or its equivalent.

As shown in FIG. 1, a steel plate comprising a spring steel of a ferrite and pearlite dual phase structure is cut into a strip shape of predetermined dimensions. This strip-shaped steel is then shaped while heated and then subjected to quenching and tempering, resulting in a bent-shaped leaf spring material 10-1 prior to the stress-induced hardening treatment. This process is publicly known and will therefore not be described. Such a pre-treated leaf spring material 10-1 has a tempered martensite structure. Materials such as an as-is leaf spring material of the ferrite + pearlite dual phase structure not subjected to quenching, or a leaf spring material having a bainite structure achieved by isothermal transformation may also be suitably used.

As shown in FIG. 1(a), the pre-treated leaf spring material 10-1 is arranged on a fixed base 1 so that both upward warped end portions are on the top and the center portion is on the bottom.

As shown in FIG. 1(b), the pre-treated leaf spring material 10-1 is pressed down onto the fixed base 1 and fixed as a substantially flat plate using a clamp 2. At this time, due to the thickness of the pre-treated leaf spring material 10-1, a tensile stress TMPa is generated on a first surface (upper surface) 11, and a compressive stress is generated on a second surface (lower surface) 12.

As shown in FIG. 1(c), the first surface 11 is then heated at a predetermined output while moving high frequency heating means 3 along a longitudinal direction A of the pre-treated leaf spring material 10-1. As a result, the tensile stress of the first surface 11 is alleviated. With this, the vicinity of the first surface 11 changes from a tempered martensite structure (or a ferrite + pearlite dual phase structure, a bainite structure, or the like) to a substantially single phase structure of high-temperature phase austenite.

On the other hand, the heated section of the first surface 11 is sequentially cooled while moving cooling means 4 in the direction A following the high frequency heating means 3. With this arrangement, the vicinity of the first surface 11 which changed to an austenite phase in the above-described heating processing is quenched to a martensite + austenite dual phase structure.

Furthermore, the temperature distribution, quenching structure, and the like in the vicinity of the first surface of the pre-treated leaf spring material 10-1 can be adjusted by quenching conditions. That is, the thickness of an above-described quenched hardened surface 11a, and the residual stress distribution in the vicinity of the first surface 11 are adjustable.

As shown in FIG. 1 (d), the above-described high frequency heating and quenching are performed on a predetermined section, such as the center section only or from one end portion to the other end portion, of the pre-treated leaf spring material 10-1, as suitably required so as to achieve the leaf spring material 10.

As shown in FIG. 1(e), the clamp 2 is then released, thereby releasing the compressive stress of the second surface so that the leaf spring material 10 returns once again to a shape wherein both end portions are warped upward. At this time, compressive stress is generated in the vicinity of the first surface 11.

As shown in FIG. 2, the leaf spring material 10 (given a thickness D) according to the embodiment comprises two layers: a parent material layer 12a having a parent material structure comprising a tempered martensite structure, and the hardened layer 11a of a thickness d having a martensite + retained austenite dual phase structure (quenched structure). Furthermore, the parent material structure may be a martensite, tempered martensite structure, bainite, or ferrite + pearlite dual phase structure, and processing that causes the carbide to be evenly distributed is preferably performed.

Several advance experiments were conducted when preparing the embodiment and the comparison example samples described later.

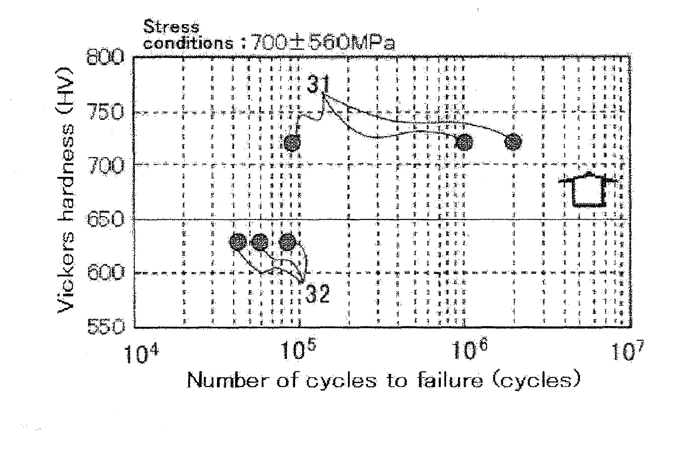

FIG. 3 shows the results when leaf spring materials 10 with different Vickers hardness values of the hardened surface 11a were prepared and subjected to a fatigue test. The stress load conditions of the fatigue test were 700+/-560MPa. With the test specimen having a Vickers hardness of 725HV, a high number of cycles to failure of 9 x 10⁴ or higher was achieved in each of the three tests (refer to reference code 31). On the other hand, with the test specimen having a Vickers hardness of 630HV, a number of cycles to failure of 9 x10⁴ or less resulted in each of the three tests (refer to reference code 32).

That is, first the steel plate is a steel plate having carbon content that is subjected to the above-described high frequency heat treatment and tempering, preferably achieving a Vickers hardness of 650HV. Conversely, spring steel that includes SUP11A steel plate that generally achieves a Vickers hardness of approximately 650HV is insufficiently quenched if the Vickers hardness after high frequency heat treatment and tempering is 650HV or less, resulting in decarburization. In such a case, the spring steel does not reliably achieve a service life equivalent to three times of a conventional leaf spring material comprising a typical improved-ausformed material at the B₁₀ life or higher, and is therefore not preferred.

However, because fatigue strength generally increases as hardness increases, the hardness is not limited in terms of an upper limit. On the other hand, when there is a defect such as a scratch, fatigue strength decreases in inverse proportion to hardness. Here, the upper limit of the hardness for the "spring material" is suitably determined according to the provided environment and the like.

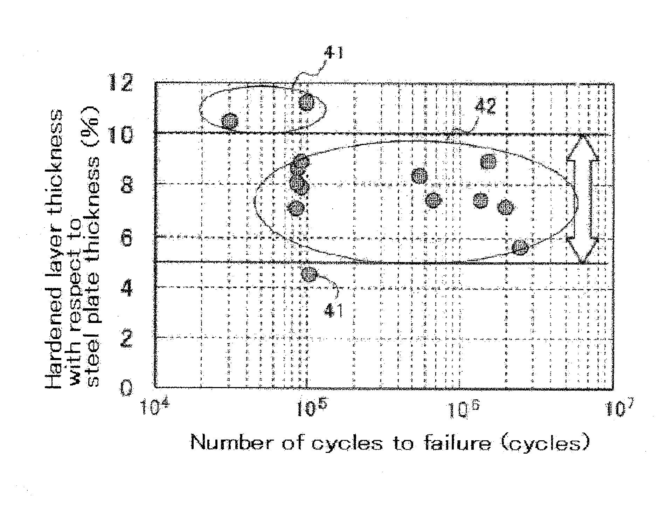

Next, FIG. 4 shows the results when the leaf spring materials 10 having different thicknesses d of the hardened layer 11 a comprising a Vickers hardness of 650HV as described above are prepared and subjected to a fatigue test. When the thickness d of the hardened layer 11a is 5% or lower or 10% or higher with respect to the steel plate thickness D, the highest number of cycles to failure achieved is only 10⁵ (refer to reference code 41). Additionally, when the thickness d of the hardened layer 11a is from 5 to 10% with respect to the steel plate thickness D, a number of cycles to failure of at least 8 x 10⁴ or higher can be achieved (refer to reference code 42). That is, the value of d / D x 100% is preferably within a certain range, and the range of this preferred value is from 5 to 10%.

Here, the vicinity of the hardened layer 11a of the parent material layer 12a is affected by heat during induction hardening, sometimes resulting in a hardness lower than that in the vicinity of the second surface 12 of the parent material layer 12a. In a case where the thickness d of the hardened layer 11a is small, the heat-affected layer yields when the bending stress of the "leaf spring" is loaded, sometimes resulting in a decrease in fatigue characteristics. The lower limit thickness d of such a hardened layer 11a is d / D x 100% = 5%.

On the other hand, when the thickness d of the hardened layer 11a is too large, the compressive residual stress is not effectively achieved in the vicinity of the hardened layer 11 a by the restoring force of the parent material layer 12a. The thickness d of the hardened layer 11 a of such an upper limit is d / D x 100% = 10%.

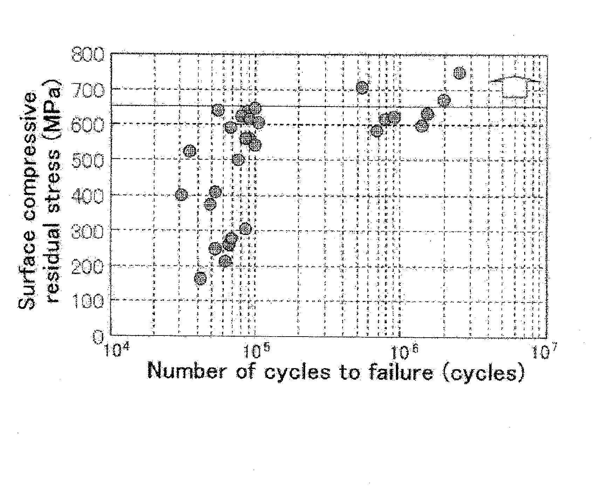

FIG. 5 shows the result when leaf spring materials 10 with different surface compressive residual stresses of the first surface 11 are prepared and subjected to a fatigue test. The number of cycles to failure improves as the surface compressive residual stress increases. To reliably achieve a number of cycles to failure of 5x10⁵, the surface compressive residual stress is preferably 650MPa or higher. Furthermore, while a high surface compressive residual stress is preferred, the maximum value is equivalent to the yield stress.

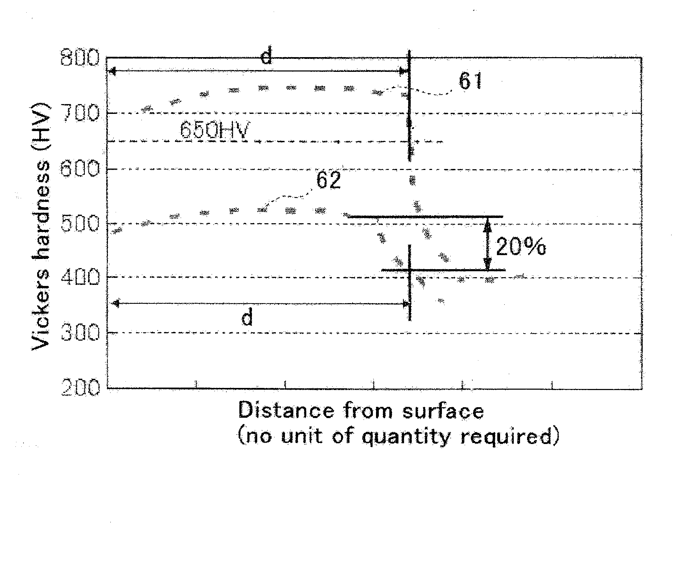

As shown in FIG. 6, the hardened layer 11a achieved by induction hardening has a substantially constant hardness in the depth direction from the first surface 11, with the hardness suddenly decreasing at a certain depth position. In a hardness distribution 61 of the leaf spring material 10 of the present invention, the region from the first surface 11 to the position where the hardness suddenly decreases (that is, to the position where Vickers hardness is 650HV or less) is defined as the thickness d of the hardened layer 11 a. Furthermore, in a hardness distribution 62 of a comparison example described later, there is a substantially constant hardness in the depth direction and then the hardness suddenly decreases at a certain depth position. As a result, similar to the definition of the thickness of the hardened layer 11 a of the hardness distribution 61 of the leaf spring material 10 of the present invention, the thickness d of the hardened layer is defined as the region from the first surface 11 to the position where the hardness suddenly decreases. Furthermore, in the comparison example, as with the leaf spring material 10 of the present invention, in a case where Vickers hardness does not reach 650HV or higher, the thickness d of the hardened layer is defined as the region to the position of a depth where the hardness decreases to 20% that of the maximum value.

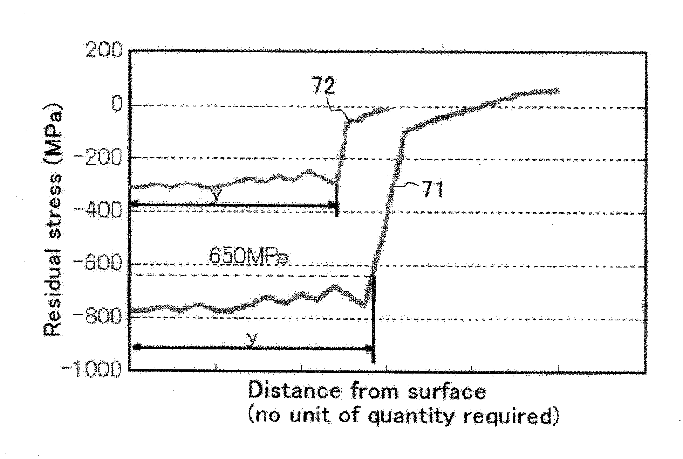

Furthermore, as shown in FIG. 7, the compressive residual stress distribution in the vicinity of the first surface 11 achieved by induction hardening has a substantially constant stress value in the depth direction from the first surface 11, and the absolute value of the stress value suddenly decreases at a certain depth position. In a compressive residual stress distribution 71 of the leaf spring material 10 of the present invention, the region from the first surface 11 to the position where the stress value suddenly decreases (that is, to the position where the stress value reaches the absolute value of the compressive stress value of substantially 650MPa or less) is defined as the thickness y of the compressive residual stress layer. Furthermore, in a compressive residual stress distribution 72 of the comparison example, the thickness y is similarly defined as the region from the first surface 11 to the position where the compressive residual stress suddenly decreases.

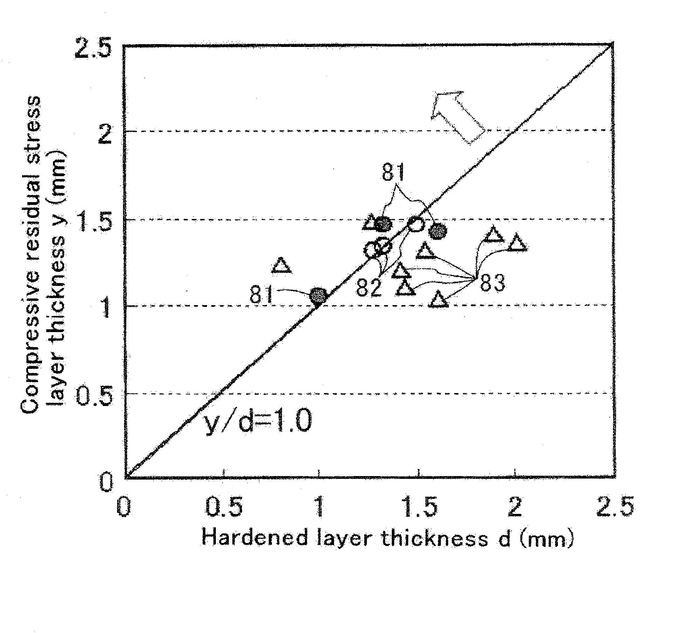

Next, FIG. 8 shows the result when leaf spring materials 10 wherein the thickness d of the hardened layer and the thickness y of the compressive residual stress layer are changed are prepared, and a fatigue test is conducted. The compressive residual stress value used for stipulating the thickness y is 650MPa. (Refer to the description of FIG. 5 described later indicating that the high fatigue strength is not achieved with a compressive residual stress value of 650MPa or less.)

Here, a test sample (reference code 81) of a number of cycles to failure of one million or higher or a test sample (reference code 82) that ends in internal fracture at a number of cycles to failure of one million exists within the range where the thickness y of the compressive residual stress layer is larger than the thickness d of the hardened layer. On the other hand, the test sample (reference code 83) in which a surface fracture occurred exists within the range where the thickness y of the compressive residual stress layer is smaller than the thickness d of the hardened layer. That is, the yield of these sections can be prevented by imparting a compressive residual stress that surpasses the boundary surface of the hardened layer 11a / parent material layer 12a where the hardness suddenly changes, and the above-described heat-affected layer in the vicinity of the hardened layer 11a of the parent material layer 12a. Conversely, since a decrease in residual stress in the hardened layer 11a is generated by the generation of such yield, surface breakage may result, which is early stage breakage mode. From the above, the thickness y of the compressive residual stress layer is preferably greater than the thickness d of the hardened layer. That is, y / d > 1.0 is preferred.

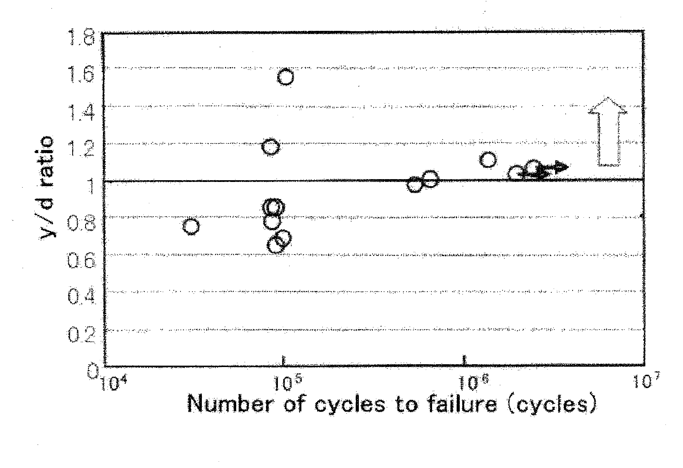

FIG. 9 shows the result when the leaf spring materials 10 comprising varied y/d ratios are further prepared and a fatigue test is conducted. From this figure, a trend showing a larger number of cycles to failure when y / d > 1.0 is revealed.

Based on the above experiment results, the induction hardening conditions were changed to the substantially strip-shaped pre-treated leaf spring material 10-1 of an 18mm plate thickness comprising SUP11A steel plate and, as shown in Table 1, the samples of embodiments 1 to 3 and comparison examples 1 to 3 were prepared.

That is, in the manufacturing method of the leaf spring material 10 of embodiments 1 to 3 that satisfy y / d > 1.0, in a state where high tensile stress has been imparted to the material, the surface in which the stress is generated is subjected to induction hardening and, after cooling, heat treatment is performed at a temperature between 80°C to 160°C. Furthermore, when tensile stress is less than T = 1000MPa, the residual stress of the leaf spring material 10 achieved in the end decreases and, as in the above-described experiment result of FIG. 5, target fatigue characteristics are not achieved. Thus, T = 1000MPa or higher is preferred.

**Table 1**

| | Hardness of the Hardened Layer (HV) | Hardened Layer Thickness to Steel Plate Thickness Ratio (%) | Surface Compressive Residual Stress (MPa) | y / d Ratio | Number of cycles to failure (cycles) |
|---|---|---|---|---|---|
| Embodiment 1 | 721 | 7.1 | 670 | 1.0 | 2010000 |
| Embodiment 2 | 720 | 5.6 | 745 | 1.1 | 2513212 |
| Embodiment 3 | 750 | 7.4 | 671 | 1.1 | 1400000 |
| Comparison example 1 | 628 | 7.1 | 327 | 1.2 | 85940 |
| Comparison example 2 | 725 | 4.4 | 604 | 0.8 | 107005 |
| Comparison example 3 | 726 | 10.3 | 246 | 0.8 | 31000 |

As shown in Table 1, embodiments 1 to 3 which satisfy y / d > 1.0, a 650HV or higher Vickers hardness of the hardened layer 11a, a compressive residual stress value of 650MPa or higher, and a 5 to 10% hardened layer thickness to steel plate thickness ratio have a reliable service life equivalent to three times that of a target conventional leaf spring material comprising a typical modified-ausformed material at a B₁₀ life.

Furthermore, heat treatment may be performed in the drying process of the coating process. When the drying temperature of the coating process is less than 80°C, cracks in the leaf spring material sometimes occur. Additionally, when the drying temperature is higher than 160°C, the residual stress is alleviated and, as described above, desired fatigue characteristics are not achieved. Further, in the drying process, a heat treatment period of 5 minutes or less results in coating that has not dried, and a heat treatment period of 120 minutes or longer alleviates residual stress, causing an excessive energy loss in the drying process. Thus, conditions for tempering and conditions for drying should be taken into consideration to determine optimum conditions.

To improve further fatigue characteristics, a publicly known surface treatment process may also be added. For example, the compressive residual stress on the topmost surface of the spring material is further increased by peening using fine grains, thereby further improving fatigue characteristics.

With the above, according to the spring material of the present embodiment, a fatigue strength equivalent to three times the B₁₀ life of a known and typical modified-ausformed material or higher is reliably achieved.

Furthermore, while representative embodiments according to the present invention and modifications based thereon have been described, the present invention is not limited thereto. It will be apparent to those skilled in the art that various modifications and variations can be made in the present invention without departing from the spirit or scope of the present invention.

## Claims

1. A leaf spring material that comprises a substantially strip-shaped steel plate having a first surface and a second surface, comprising:
a hardened layer, in the vicinity of said first surface, made of an induction-hardened structure having a higher average hardness than that of a parent material structure in the vicinity of said second surface; and
a compressive residual stress layer, in the vicinity of said first surface, of a thickness that is at least not smaller than that of said hardened layer.

2. The leaf spring material according to claim 1, wherein said compressive residual stress layer has a stress distribution that changes in step-like fashion at a boundary face on the side of said second surface.

3. The leaf spring material according to claim 1, wherein the absolute value of the compressive residual stress of said compressive residual stress layer is at least 650MPa or greater.

4. The leaf spring material according to one of claims 1 to 3, wherein said hardened layer has a hardness of at least 650HV or higher.

5. The leaf spring material according to one of claims 1 to 3, wherein said hardened layer has a thickness of 5 to 10% of the thickness of said steel plate.

6. The leaf spring material according to one of claims 1 to 3, wherein said induction-hardened structure comprises a martensite + austenite dual phase structure.

7. The leaf spring material according to one of claims 1 to 3, wherein said parent material structure comprises one or more of martensite, tempered martensite structure, troostite, sorbite, bainite, ferrite, and pearlite.

8. A method for manufacturing of leaf spring material, comprising
imparting tensile stress on a first surface of a substantially strip-shaped steel plate along the longitudinal direction of said first surface while imparting compressive stress on a second surface along the longitudinal direction of said second surface, and subjecting said first surface to induction hardening;
wherein said induction hardening comprises:
imparting in the vicinity of said first surface a hardened layer comprising an induction-hardened structure having a higher average hardness than that of a parent material structure in the vicinity of said second surface; and
imparting in the vicinity of said first surface a compressive residual stress layer of a thickness that is at least not smaller than that of said hardened layer.

9. The method according to claim 8,
wherein said induction hardening comprises imparting tensile stress of 1000MPa or higher at ambient temperature on said first surface, then heating and quenching, and releasing said tensile stress.

10. The method according to claim 8,
comprising low temperature tempering at a temperature of 80°C to 160°C after said induction hardening.

11. The method according to claim 10,
wherein said low temperature tempering is performed for a duration shorter than 120 minutes.

12. The method according to one of claims 8 to 11, comprising shot peening on said first surface.

13. The method according to one of claims 8 to 11, wherein said compressive residual stress layer has a stress distribution that changes in step-like fashion at a boundary face on the side of said surface.
